# EUROPÄISCHE PATENTANMELDUNG

(11) **EP 1 810 858 A2**
(43) Veröffentlichungstag der Anmeldung: **25.07.2007**
(21) Anmeldenummer: 06024754.1
(22) Anmeldetag: 30.11.2006
(51) Int. Cl.: B60J 7/14

(54) **Fahrzeugdach**

(30) Priorität: 24.01.2006 DE 102006003219
(71) Anmelder: Wilhelm Karmann GmbH, 49084 Osnabrück (DE)
(72) Erfinder: Plaßmeyer, Jörg, 49196 Bad Laer (DE)

(57) **Zusammenfassung**

Fahrzeugdach, welches mehrere mittels Hebeln (4, 5, 6) miteinander verbundene Dachteile (1, 2, 3) aufweist, die in einer Geschlossenstellung eine geschlossene Dachhaut bilden und in einer Offenstellung mit ihren Außenflächen in die gleiche Richtung weisend übereinander anordenbar sind. Dabei sind die Hebel (4, 5, 6) beidseitig der Dachteile (1, 2, 3) seitlich neben diesen angeordnet und an jeder Seite jedes Dachteils (1, 2, 3) in dessen mittlerem Bereich drehbar um eine Fahrzeugquerachse (7, 10, 13) angelenkt. Die Hebel (4, 5, 6) sind gelenkig mit einem hinteren Bereich eines in Geschlossenstellung vor dem jeweiligen Dachteil angeordneten Dachteils, falls vorhanden, verbunden und gelenkig mit einem vorderen Bereich eines in Geschlossenstellung hinter dem jeweiligen Dachteil angeordneten Dachteils, falls vorhanden, verbunden.

## Beschreibung

Die Erfindung betrifft ein Fahrzeugdach gemäß dem Oberbegriff des Anspruchs 1.

Aus der US-Patentschrift 6,786,528, von der im Oberbegriff des Anspruchs 1 ausgegangen wird, ist ein Fahrzeugdach bekannt, dessen Dachteile mittels jeweils zwei an jeder Fahrzeugseite unterhalb der Dachhaut angeordneter Hebel gelenkig miteinander verbunden sind, sodass die Dachteile in einer Offenstellung mit ihren Außenflächen in die gleiche Richtung weisend kompakt übereinander angeordnet werden. Die Hebel bilden jeweils viergelenkige Zwangsführungen und sind an einem Endbereich, der in Offenstellung das jeweilige vordere Ende des zugehörigen Dachteils umgreift, stark gebogen. Bei geschlossenem Dach wird der Fahrgastinnenraum beeinträchtigt.

Aufgabe der Erfindung ist es, ein als Hartschalendach ausbildbares, öffen- und schließbares Fahrzeugdach bereitzustellen, das bei einfachem Aufbau kompakt zusammenlegbar ist.

Die Aufgabe wird mit einem Fahrzeugdach gemäß Anspruch 1 gelöst.

Die Unteransprüche 2 bis 13 sind auf vorteilhafte Ausführungsformen des erfindungsgemäßen Fahrzeugdaches gerichtet.

Die Unteransprüche 14 bis 16 sind auf ein Fahrzeug gerichtet, das das erfindungsgemäße Fahrzeugdach verwendet.

Insgesamt wird mit der Erfindung eine einfache und zuverlässige Möglichkeit geschaffen, ein mehrteiliges Dach eines Fahrzeugs von einer Geschlossenstellung in eine Offenstellung und umgekehrt zu überführen, wobei die dazu notwendige Mechanik mit wenigen Hebeln und Lenkern auskommt und das unter der Dachhaut zur Verfügung stehende Volumen des Fahrgastinnenraums nicht verkleinert.

Die Erfindung wird im Folgenden anhand schematischer zeichnungen beispielsweise und in weiteren Einzelheiten anhand bevorzugter Ausführungsformen erläutert.

In den Figuren stellen dar:
- Fig. 1: eine schematische Darstellung eines 3-teiligen Fahrzeugdaches in seiner Geschlossenstellung,
- Fig. 2: eine schematische Darstellung des 3-teiligen Fahrzeugdaches in einer Stellung zwischen der Geschlossenstellung und der Offenstellung,
- Fig. 3: eine schematische Darstellung des 3-teiligen Fahrzeugdaches in seiner Offenstellung,
- Fig. 4: einen Teillängsschnitt eines Fahrzeugs mit dem in Offenstellung befindlichen Fahrzeugdach, das durch Drehung in den Gepäckraum des Fahrzeugs hinein bewegt wurde, und
- Fig. 5: einen Teillängsschnitt eines Fahrzeugs mit dem in Offenstellung befindlichen Fahrzeugdach, das durch Verschwenken und Absenken in den Gepäckraum des Fahrzeugs hinein bewegt wurde.

Nachfolgend wird beispielhaft ein Fahrzeugdach 20 mit drei als Hartschalen ausgebildeten Dachteilen 1, 2 und 3 beschrieben. Die Erfindung ist weder auf die Anzahl der Dachteile noch auf deren Ausführungsform beschränkt. Die Dachteile oder einzelne von ihnen können beispielsweise mit Stoff bespannte Rahmen sein, oder ein Schiebedach aufweisen, bzw. mit Scheiben versehen sein. In den einzelnen Dachteilen kann ein Faltmechanismus zum separaten Öffnen und Schließen der einzelnen Dachteile integriert sein.

Weiterhin stellen die Figuren nur die linke Seite des Fahrzeugdaches 20 dar, die rechte Fahrzeugseite ist bezüglich der Fahrzeuglängsachse symmetrisch.

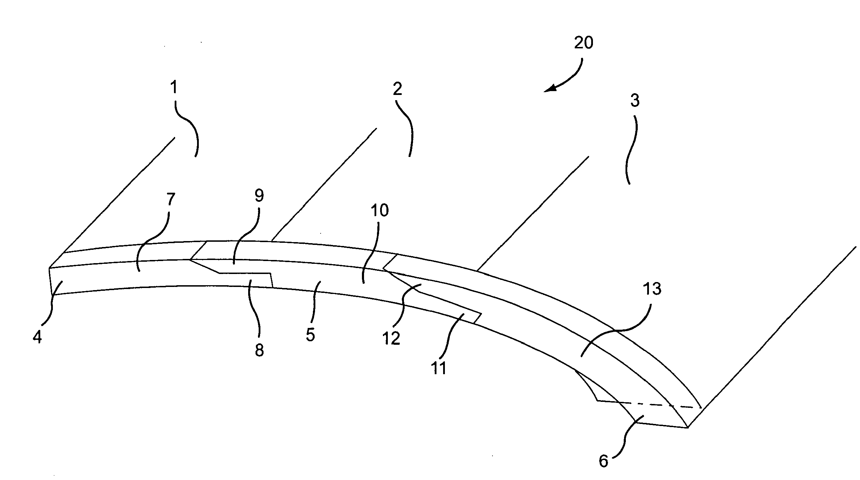

Gemäß Fig. 1 bilden die drei Dachteile 1, 2 und 3 in der Geschlossenstellung des Fahrzeugdachs 20 eine geschlossene Dachhaut.

An beiden Seiten eines jeden Dachteils 1, 2 und 3 ist in dessen mittlerem Bereich ein Hebel 4, 5 oder 6 drehbar um eine in Fahrzeugquerrichtung weisende Achse 7, 10 oder 13 angelenkt. Dabei sind die Hebel 4, 5 und 6 so ausgestaltet, dass die vorderen und hinteren Bereiche der Hebel 4, 5 und 6 das jeweilige Dachteil 1, 2 oder 3 in Geschlossenstellung des Fahrzeugdaches nach vorne bzw. nach hinten überragen, wenn sich ein vorderes und / oder ein hinteres Dachteil an das Dachteil anschließt.

Die die Dachteile 1, 2 und 3 überragenden Bereiche der Hebel 4, 5 und 6 sind gelenkig um in Fahrzeugquerrichtung weisende Achsen 8, 9, 11 und 12 mit den vorderen und hinteren Rändern der jeweils benachbarten Dachteile verbunden.

In Geschlossenstellung des Fahrzeugdachs 20 überlappende Bereiche der Hebel 4, 5 und 6 sind dabei so gestaltet, daß jeweils der vordere Endbereich eines Hebels den hinteren Endbereich eines vor ihm liegenden Hebels überdeckt.

Schließt sich nach vorne oder nach hinten kein weiteres Dachteil an, so schließen die Hebel 4 und 6 bündig mit dem vorderen oder dem hinteren Rand der Dachteile 1 und 3 ab. Dabei können die vorderen Hebel 4 in Geschlossenstellung des Fahrzeugdachs 20 mit einem Windschutzscheibenrahmen (nicht dargestellt) verriegeln und das vordere Dachteil 1 nach unten drücken, um eine sichere Anlage des vorderen Randes des Dachteils 1 an dem Windschutzscheibenrahmen sicherzustellen.

Alternativ kann das vordere Dachteil 1 mit dem Windschutzscheibenrahmen verriegeln und werden die vorderen Hebel mit dem vorderen Dachteil verriegelt.

In anderen Ausführungsformen können die vorderen Bereiche der vorderen Hebel 4 und die hinteren Bereiche der hinteren Hebel 6 nach ihren Drehachsen 7 und 13 im mittleren Bereich der Dachteile 1 und 3 entfallen und die von den Hebeln 4 und 6 nicht beanspruchten Bereiche können von den Dachteilen 1 und 3 eingenommen werden. Hierbei kann das vordere Dachteil 1 beispielsweise direkt mit dem Windschutzscheibenrahmen verriegelt werden.

Vorteilhafterweise werden die Oberseiten und/oder die äußeren Seitenbereiche der Hebel 4, 5 und 6 derart gestaltet sein, dass sie weitere Funktionen, wie z.B. eine seitliche Verlängerung des Fahrzeugdachs 20, die Funktion von Wasserablaufrinnen, Dachgepäckträgeraufnahmen, einer Dachreling, etc., übernehmen.

Die Unterseiten der Hebel 4, 5 und 6 können weiterhin derart gestaltet sein, dass sie Dichtungen zur Anlage von Seitenscheiben des Fahrzeugs aufweisen.

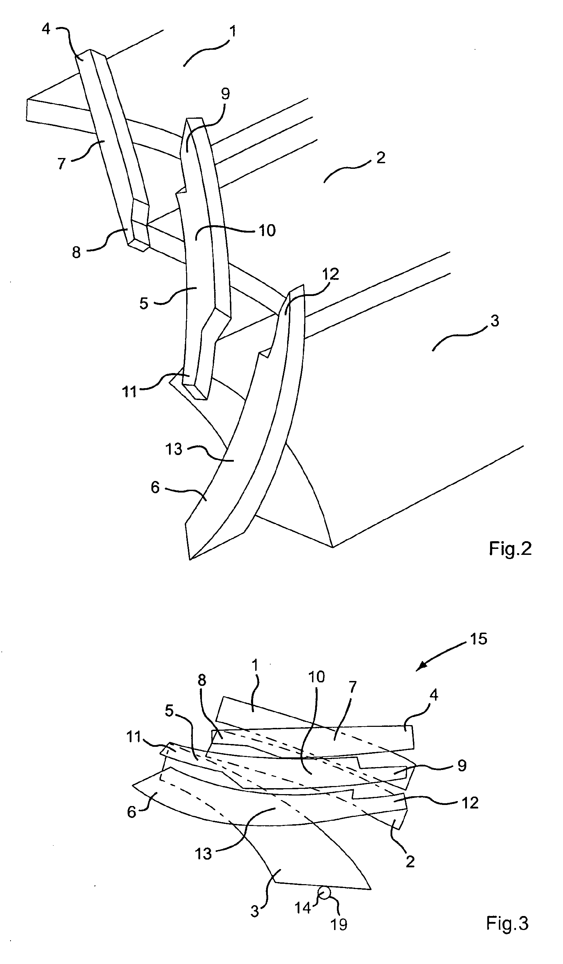

In Fig. 2 ist das Fahrzeugdach 20 in einer Zwischenstellung zwischen der Geschlossenstellung und der Offenstellung dargestellt.

Wie ersichtlich ist, drehen sich bei einem Öffnen des Fahrzeugdaches 20 die Hebel 4, 5 und 6 im Uhrzeigersinn um ihre etwa mittigen Drehachsen 7, 10 und 13. Dabei heben sich die jeweils vorderen Dachteile 1 und 2 über die sich hinter ihnen befindlichen Dachteile 2 und 3 hinweg, wobei das hintere Dachteil 3 beispielsweise zunächst in seiner Position verharrt oder sich ebenfalls bewegt.

Bei der Öffnungsbewegung beschreiben die Dachteile 1 und 2 im Gegensatz zu den Hebeln 4, 5 und 6 bogenförmige Bahnen und werden dabei von den Hebeln 4, 5 und 6 in einer etwa parallelen Stellung zueinander gehalten.

Durch die etwa mittige Anlenkung der seitlich angeordneten Hebel 4, 5 und 6 an ihren jeweiligen Dachteilen 1, 2 und 3 werden durch die oben beschriebenen Bewegungsabläufe die jeweils vorderen und hinteren Endbereiche der jeweilig benachbarten Dachabschnitte 1, 2 und 3 aneinander angenähert bzw. kommen in der Offenstellung übereinander zur Ablage.

Wie aus der Betrachtung der Figur 2 leicht vorstellbar ist, können die einzelnen Dachteile 1 und 2 auch so geschwenkt werden, dass sie untereinander zu liegen kommen. Hierzu müssen einerseits die vorderen und hinteren Endbereiche der Hebel 4, 5 und 6 umgekehrt ausgebildet sein, d.h. der hintere Endbereich eines jeweils vorderen Hebels befindet sich in Geschlossenstellung des Fahrzeugdachs 20 oberhalb des vorderen Endbereichs eines hinteren Hebels. Die Öffnungsbewegung erfolgt durch Drehen der Hebel 4, 5 oder 6 gegen den Uhrzeigersinn.

Fig. 3 zeigt das Fahrzeugdach 20 gemäß Fig. 1 und 2 in einer Zwischenstellung mit kompakt übereinander zu einem Fahrzeugdachpaket 15 angeordneten Dachteilen 1, 2 und 3. Das hintere Dachteil 3 befindet sich in der gleichen Position wie in Fig. 1.

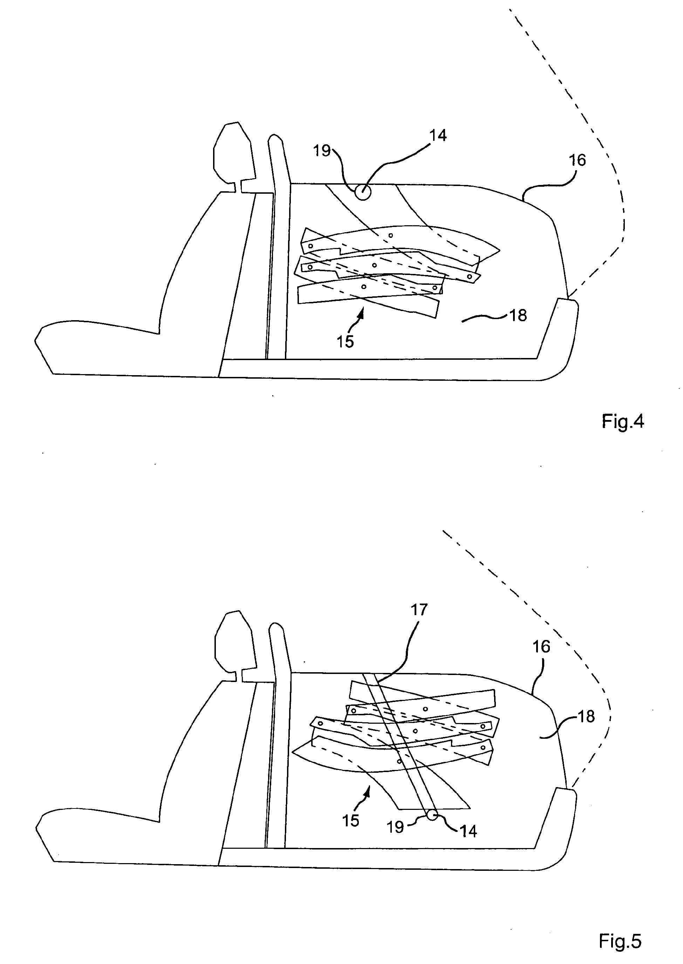

Gemäß Fig. 4 kann das Fahrzeugdachpaket 15 insgesamt um eine in Fahrzeugquerrichtung weisende Drehachse 14 in Uhrzeigerrichtung gedreht werden und in einem Gepäckraum 18 des Fahrzeugs untergebracht werden. Ein für eine Lagerung um die Drehachse 14 geeigneter Fortsatz 19, der an dem hinteren Dachteil 3 angeordnet ist, ist auch in Fig. 3 dargestellt.

In Fig.4 ist eine Gepäckraumklappe 16 in einer Offenstellung gestrichelt dargestellt, in die sie zum Verstauen des Fahrzeugdachpakets 15 gebracht wird.

Eine weitere Möglichkeit zum Verstauen des Fahrzeugdachpakets 15 ist in Fig. 5 dargestellt. Dabei wird das hintere Dachteil 3 um eine in Fahrzeugquerrichtung weisende Drehachse 14, welche durch den Fortsatz 19 läuft, in Gegenuhrzeigerrichtung verschwenkt und gleichzeitig in einer fahrzeugfesten Nut 17 abgesenkt, in die ein Zapfen des Fortsatzes 19 eingreift.

Der vorstehend beschriebene Ablauf der Schwenk- und Verschiebebewegungen des Fahrzeugdachpakets 15 in den Gepäckraum 18 hinein wurde zur Verdeutlichung der einzelnen Bewegungen separat dargestellt. Er kann bereits während des Zusammen- oder Aufklappens des Fahrzeugdaches 20 ausgeführt werden. Dazu ist beispielsweise das freie Ende des Hebels 6 über ein geeignetes Führungsgestänge mit der Fahrzeugstruktur verbunden.

In einer anderen Ausführungsform des erfindungsgemäßen Fahrzeugdachs ist der Hebel 6 drehbar an der Fahrzeugstruktur und nicht am hinteren Dachteil gelagert (nicht dargestellt) und ist das hintere Dachteil 3 mittels eines zusätzlichen Hebels (nicht dargestellt) mit der Fahrzeugstruktur verbunden. Durch Kombination des entstandenen Viergelenks aus Fahrzeugstruktur, Hebel 6, Dachteil 3 und dem nicht dargestellten Hebel mit einem Antriebsmechanismus, vorzugsweise einem Hydraulikzylinder oder einem Elektromotor, kann das Dach aus der geschlossenen in die geöffnete Stellung bewegt werden. Dabei kann der Antrieb sowohl innerhalb der Dachmechanik zwischen zweien ihrer Hebel als auch zwischen der Fahrzeugstruktur und einem Element des Daches angebracht sein.

Das erfindungsgemäße Fahrzeugdach ist so ausgelegt, dass es sowohl manuell als auch automatisch geöffnet und geschlossen werden kann. Der gesamte Bewegungsablauf des Zusammenklappens oder des Aufklappens kann dabei durch Drehen eines der Hebel 4, 5 oder 6 relativ zum zugehörigen Dachteil vollzogen werden. Damit ist für die Anbringung eines automatischen Antriebs eine große Gestaltungsfreiheit gegeben, der hydraulisch, pneumatisch oder elektromotorisch zwischen den Bauteilen des Daches und/oder Bauteilen des Daches und der Fahrzeugstruktur wirken kann.

Weiterhin kann das Fahrzeugdach 20 auch vom Fahrzeug entfernt werden, indem eine Verbindung des hinteren Dachteils 3 zur Fahrzeugstruktur gelöst wird. Eine solche Verbindung kann z.B. eine Verrastung, Verschraubung, Klemmung, etc. des Fortsatzes 19 mit der Fahrzeugstruktur sein.

### BEZUGSZEICHENLISTE

- 1: vorderes Dachteil
- 2: mittleres Dachteil
- 3: hinteres Dachteil
- 4: vordere Hebel
- 5: mittlere Hebel
- 6: hintere Hebel
- 7: Drehachse
- 8: Drehachse
- 9: Drehachse
- 10: Drehachse
- 11: Drehachse
- 12: Drehachse
- 13: Drehachse
- 14: Drehachse
- 15: Fahrzeugdachpaket
- 16: Gepäckraumklappe
- 17: Nut
- 18: Gepäckraum
- 19: Fortsatz
- 20: Fahrzeugdach

## Patentansprüche

1. Fahrzeugdach enthaltend,
mehrere mittels Hebeln (4, 5, 6) miteinander verbundene Dachteile (1, 2, 3), die in einer Geschlossenstellung eine geschlossene Dachhaut bilden und in einer Offenstellung mit ihren Außenflächen in die gleiche Richtung weisend übereinander anordenbar sind,
**dadurch gekennzeichnet,**
**dass** die Hebel (4, 5, 6) beidseitig der Dachteile (1, 2, 3) seitlich neben diesen angeordnet sind, wobei an jeder Seite jedes Dachteils (1, 2, 3) in dessen mittlerem Bereich ein Hebel (4, 5, 6) um eine in Fahrzeugquerrichtung gerichtete Achse (7, 10, 13) drehbar angelenkt ist, der gelenkig mit einem hinteren Bereich eines in Geschlossenstellung vor dem jeweiligen Dachteil angeordneten Dachteils, falls vorhanden, verbunden ist und gelenkig mit einem vorderen Bereich eines in Geschlossenstellung hinter dem jeweiligen Dachteil angeordneten Dachteils, falls vorhanden, verbunden ist.

2. Fahrzeugdach nach Anspruch 1 **dadurch gekennzeichnet, dass** in Geschlossenstellung des Fahrzeugdachs ein vorderer Endbereich eines Hebels (4, 5, 6) über einem hinteren Endbereich des vor dem jeweiligen Hebel angeordneten Hebels angeordnet ist.

3. Fahrzeugdach nach Anspruch 1 **dadurch gekennzeichnet, dass** in Geschlossenstellung des Fahrzeugdachs ein hinterer Endbereich eines Hebels (4, 5, 6) über einem vorderen Endbereich des hinter dem jeweiligen Hebel angeordneten Hebels angeordnet ist.

4. Fahrzeugdach nach einem der Ansprüche 1 bis 3
**dadurch gekennzeichnet,**
**dass** die Oberseiten der Hebel (4, 5 ,6) in Geschlossenstellung des Fahrzeugdachs die Oberseiten der Dachteile (1, 2, 3) seitlich verlängern.

5. Fahrzeugdach nach einem der Ansprüche 1 bis 4 **dadurch gekennzeichnet,**
**dass** die vorderen Hebel (4) in der Geschlossenstellung mit einem Windschutzscheibenrahmen verriegeln.

6. Fahrzeugdach nach einem der Ansprüche 1 bis 5 **dadurch gekennzeichnet,**
**dass** die vorderen Hebel (4) ein vorderes Dachteil (1) in der Geschlossenstellung nach unten drücken.

7. Fahrzeugdach nach einem der Ansprüche 1 bis 6 **dadurch**
**gekennzeichnet,**
**dass** das vordere Dachteil (1) in der Geschlossenstellung mit einem Windschutzscheibenrahmen verriegelt.

8. Fahrzeugdach nach der Anspruch 7 **dadurch gekennzeichnet, dass** die vorderen Hebel (4) in der Geschlossenstellung mit dem vorderen Dachteil (1) verriegeln.

9. Fahrzeugdach nach einem der Ansprüche 1 bis 8 **dadurch gekennzeichnet,**
**dass** die Bewegung des Fahrzeugdachs aus der Offenstellung in die Geschlossenstellung und umgekehrt mittels Antreiben eines einzigen Dachteils (1,2,3) oder Hebelpaares (4,5,6) erfolgt.

10. Fahrzeugdach nach einem der Ansprüche 1 bis 9 **dadurch gekennzeichnet,**
**dass** die Hebel (4, 5, 6) eine Dachreling bilden.

11. Fahrzeugdach nach einem der Ansprüche 1 bis 10 **dadurch gekennzeichnet,**
**dass** die Hebel (4, 5, 6) als Wasserablaufrinnen dienen.

12. Fahrzeugdach nach einem der Ansprüche 1 bis 11 **dadurch gekennzeichnet,**
**dass** die Hebel (4, 5, 6) Dachgepäckträgeraufnahmen aufweisen.

13. Fahrzeugdach nach einem der Ansprüche 1 bis 12 **dadurch gekennzeichnet,**
**dass** die Hebel (4, 5, 6) Dichtungen zur Anlage von Seitenscheiben eines Fahrzeugs aufweisen.

14. Fahrzeug mit einem Fahrzeugdach nach einem der Ansprüche 1 bis 13, **dadurch gekennzeichnet,**
**dass** ein hinteres Dachteil (3) drehbar um eine in Fahrzeugquerrichtung gerichtete Drehachse (14) an der Fahrzeugstruktur befestigt ist.

15. Fahrzeug nach Anspruch 14, **dadurch gekennzeichnet,**
**dass** die Drehachse (14) verschiebbar zur Fahrzeugstruktur am Fahrzeug angebracht ist.

16. Fahrzeug mit einem Fahrzeugdach nach einem der Ansprüche 1 bis 13 **dadurch gekennzeichnet,**
**dass** die hinteren Hebel (6) drehbar mit der Fahrzeugstruktur verbunden sind und das hintere Dachteil (3) über einen weiteren Hebel während des Öffnens oder des Schließens des Fahrzeugdachs geführt wird.
